# EUROPEAN PATENT APPLICATION

(11) **EP 0 799 723 A1**
(43) Date of publication of application: **08.10.1997**
(21) Application number: 97200688.6
(22) Date of filing: 07.03.1997
(51) Int. Cl.: B60B 27/00

(54) **Lightweight hub unit**

(30) Priority: 03.04.1996 NL 1002775
(71) Applicant: SKF Industrial Trading & Development Co, B.V., NL-3430 DT Nieuwegein (NL)
(72) Inventor: Kapaan, Hendrikus Jan, 3435 DM Nieuwegein (NL); Olschewski, Armin Herbert Emil August, 3438 AC Nieuwegein (NL)
(74) Representative: de Bruijn, Leendert C.

(57) **Abstract**

A hub unit (1) for a vehicle wheel comprises a rolling bearing with an inner ring (2) and an outer ring (3), between which rolling elements are accommodated, one of the rings of which can be fixed to the wheel suspension of a vehicle. The said one ring (2) is provided with a clamping projection (6) which can be fixed to the wheel suspension (10) by means of a clamping element. The clamping projection (6) can form a whole with the said one ring, which can be made of metal plate material. The inner ring (2) or the outer ring (3) can bear a clamping projection constructed as a clamping rim, which clamping rim is secured by means of a clamping ring.

## Description

The invention relates to a lightweight hub unit, preferably usable for a vehicle wheel, comprising a rolling bearing with an inner ring and an outer ring, between which rolling elements are accommodated, one of which rings has a clamping projection which can be fixed to the wheel suspension of a vehicle by means of a clamping element.

A hub unit of this type is known from EP-A-680836. As, because of its construction, in particular with a three-point or four-point bearing, it is compact and has a relatively low weight, this known hub unit is particularly suitable for light vehicles with a low energy consumption. In light vehicles of this type it is not only the weight of the hub unit which is important but also the cost price and the assembly costs.

The aim of the invention is, therefore, so to improve the known hub unit that the associated costs can be further reduced. This aim is achieved in that the clamping projection comprises a clamping rim which can be fixed to the wheel suspension by means of a clamping ring.

The clamping element provides, in combination with the clamping projection on the inner ring, a simple, stable suspension for the hub unit, the weight of which is limited. In this context the clamping projection is preferably integral with the said one ring and this component is made of metal plate material.

Furthermore, the clamping projection is preferably constructed as a clamping rim directed radially outwards, such that the clamping rim can be fixed to the wheel suspension by means of a clamping ring. Said clamping ring can be made of, for example, aluminium. In order to obtain a stable construction, the clamping ring preferably fits closely around the clamping rim with a certain fit and has a flange which is directed radially inwards, overlaps the clamping rim and bears against the clamping rim.

A further simplification of the hub unit is achieved in an embodiment wherein the inner ring bears the said clamping rim and the outer ring is surrounded by a fixing ring which has a flange which is directed radially inwards and bears against that side of the outer ring which faces the wheel suspension, and, at the other side of the outer ring, a centring bush for a wheel is provided, which centring bush is connected to the fixing ring. Said fixing ring can also be made of aluminium.

The centring bush with shaft connection, suitable for torque transfer, can form a whole with a ring component surrounding the fixing ring, which ring component, in turn, forms a whole with a brake disc or brake drum offset with respect to the centring bush over the axial length of the ring component.

Furthermore, the clamping ring can have means for fixing the brake calliper to the clamping ring. In an alternative embodiment the brake calliper can form an integral part of the clamping ring.

The hub unit according to the invention can be used both with non-driven wheels and with driven wheels. In the latter variant, the centring bush has a hole connection suitable for torque transfer, which can be brought into interaction with a stub axle of the drive coupling.

Preferably, a three-point or four-point bearing is used, the inner ring of which is in one piece and the outer ring of which consists of two axial halves, which halves are held, under axial pretension, clamped against one another between the flange of the fixing ring and the construction comprising a centring bush, flange, ring component and brake disc, which construction consists of a single assembly.

A few illustrative embodiments of the hub unit according to the invention will be explained in more detail below with reference to the drawings.

Figure 1 shows a driven hub unit according to the invention, partially in cross-section.

Figure 2 shows part of a non-driven hub unit.

Figure 3 shows part of a further non-driven hub unit.

Figure 4 shows a detail along IV-IV in Figure 1.

Figure 5 shows a variant.

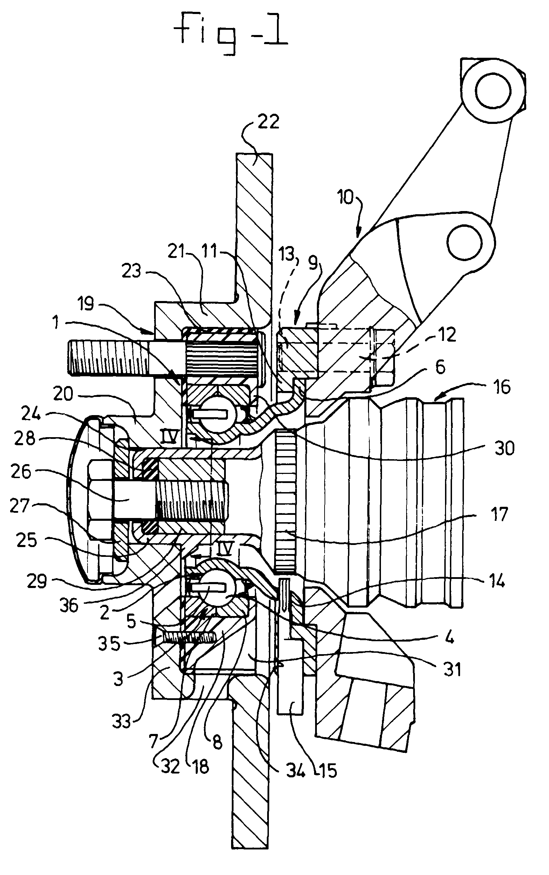

The hub unit shown in figure 1 comprises a rolling bearing, which is indicated in its entirety by 1 and consists of an inner ring 2, an outer ring 3, balls 4 and a cage 5.

The inner ring 2 is made of metal plate material and is integral with a clamping rim 6.

The outer ring 3 consists of the two outer ring halves 7, 8, which are held clamped against one another under pretension, as will be explained below.

The clamping rim 6 of the inner ring 2 is clamped firmly by means of clamping ring 9 to the wheel suspension construction, which is indicated in its entirety by 10. Clamping ring 9 has a flange 11, which is directed radially inwards, overlaps the clamping rim 6 and bears against the latter under pretension. Said pretension is produced by means of the bolts 12, which are screwed into holes 13 in the clamping ring 9, which holes 13 are provided with a screw thread.

Both the clamping ring 9 and the inner ring 2, close to its clamping rim 6, have openings 34 and 14, respectively, through which electronic monitoring equipment, such as an ABS sensor 15, passes. Markings 17 for measuring the number of revolutions of the shaft by the ABS sensor are provided on the drive shaft 16.

The outer ring 3, which consists of the two outer ring halves 7, 8, is held, pressed together under pretension, between a fixing ring 18 on one side and the flange 33 of the construction 19, which consists of a single assembly and also comprises a centring bush 20 for the wheel, a ring component 21 and a brake disc 22. These components are joined by bolts 35 and are pretensioned.

The fixing ring 18 has a flange 30, which points inwards and bears against the outer ring half 8. As a result, the desired pretensioning between the outer ring halves 7, 8, the balls 4 and the inner ring 2 of the three-point or four-point rolling bearing 1 is obtained.

Thermal insulation 23 is fitted between the construction 19 and the outer ring 3 to prevent it being possible for the heat generated in the brake disc 22 on braking to be transmitted to the rolling bearing 1.

The centring bush 20 has a hole connection 24 on the inside, which hole connection is suitable for torque transfer and into which the corresponding non-circular stub axle 25 of the drive shaft 16 extends. The connection between drive shaft 16 and bush 20 is ensured by means of bolt 26, ring 27, non-metallic ring 28, which has resilient properties (for example is made of rubber or a special plastic), in case the pretension becomes reduced, and nut 29.

In places slots 31 have been made in the fixing ring 18 and a hole 32 has been made in the ring component 21 of the construction 19, such that the brake disc 22 can also be cooled by air flowing outwards via the ventilation passage 31, 32 thus formed. The size and the distribution of the slots 31 depends on the number of wheel studs used.

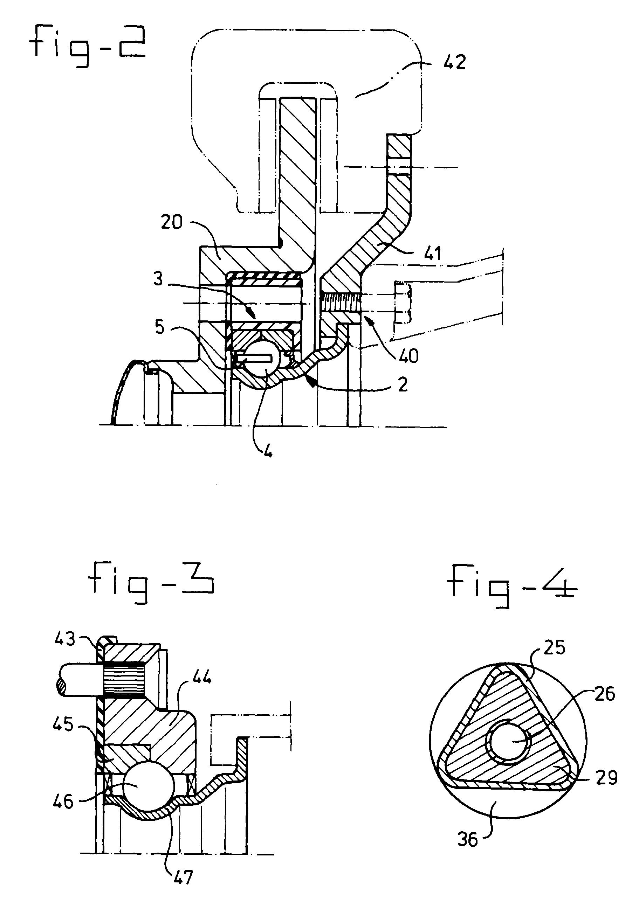

Figure 2 shows a hub unit which is not driven. With this embodiment an alternative fixing ring 40 is used which carries a projection 41 to which the brake calliper 42, indicated by broken lines, is attached.

The variant in Figure 3 shows a hub unit which is not driven and is provided with a cover plate 43 which is secured, by means of bolts which are not shown, in the outer ring half 44. Said bolts and the cover plate 43 apply pressure against the other outer ring half 45, as a result of which the desired tension in the three-point or four-point bearing is generated. Said three-point or four-point bearing also, of course, comprises balls 46 and the inner ring 47, which is made of metal plate.

Figure 4 shows the view along IV-IV in Figure 1 and it can be seen that the non-circular stub axle 25 has projections 36, which bear against the flange 33.

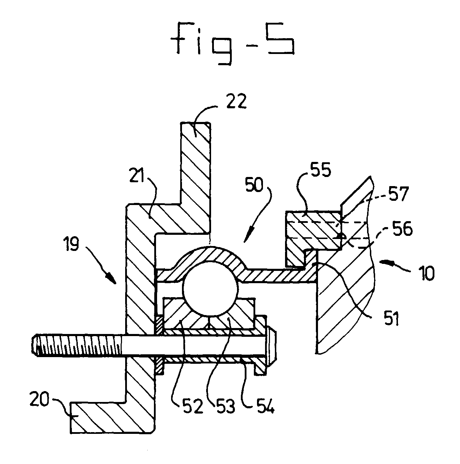

Figure 5 shows part of a hub unit in which the metal plate outer ring 50 bears a clamping rim 51. The inner ring halves 52, 53 are pressed against one another under pretension by means of fixing ring 54, construction 19 and bolts (which are not shown). The clamping rim 51, and consequently the hub unit, can be fixed to the wheel suspension construction, indicated by 10, by means of clamping ring 55 and the bolts 57 screwed into the holes 56 provided with an internal screw thread.

## Claims

1. Hub unit for a vehicle wheel, comprising a rolling bearing (1) with an inner ring (2; 52, 53) and an outer ring (3, 50), between which rolling elements (4) are accommodated, one of which rings (2, 50) has a clamping projection (6, 51) which can be fixed to the wheel suspension (10) of a vehicle by means of a clamping element (9, 55), characterized in that the clamping projection comprises a clamping rim (6, 51) which can be fixed to the wheel suspension (10) by means of a clamping ring (9, 55).

2. Hub unit according to Claim 1, wherein the clamping projection (6, 51) is integral with the said one ring (2, 50).

3. Hub unit according to Claim 1 or 2, wherein the said one ring (2, 3) is made of metal plate material.

4. Hub unit according to Claim 2, 3 or 4, wherein the clamping projection is directed radially outwards.

5. Hub unit according to Claim 4, wherein the clamping ring (9, 55) fits around the clamping rim (6, 51) with a fit and has a flange (11) which is directed radially inwards, overlaps the clamping rim (6, 51) and bears against the clamping rim (6, 51).

6. Hub unit according to one of the preceding claims, wherein the inner ring (2) bears the said clamping rim (6) and the outer ring (3) is surrounded by a fixing ring (18) which has a flange (30) which is directed radially inwards and bears against that side of the outer ring (3) which faces the wheel suspension, and, at the other side of the outer ring (3), a centring bush (20) for a wheel is provided, which centring bush is connected to the fixing ring (18).

7. Hub unit according to Claim 6, wherein the fixing ring carries wheel bolts.

8. Hub unit according to Claim 6 or 7, wherein the centring bush (20) forms a whole with a ring component (21) surrounding the fixing ring (18), which ring component forms a whole with a brake disc (22) which is offset with respect to the centring bush (20) over the axial length of the ring component (21).

9. Hub unit according to one of the preceding Claims, wherein the clamping ring (9) has means for fixing the brake calliper to the clamping ring (9) or wherein the brake calliper is an integral part of the clamping ring.

10. Hub unit according to Claim 7 or 8, wherein the fixing ring (18) and the ring component (21) are provided with openings (31, 32) to form a through ventilation passage.

11. Hub unit according to one of Claims 6-10, wherein the fixing ring (18) is made of a non-metallic, heat-blocking material (for example carbon).

12. Hub unit according to one of Claims 7-11, wherein thermal insulation (23) is present between the ring component (21) and the fixing ring (18).

13. Hub unit according to one of Claims 6-12, wherein the centring bush (20) has a hole connection (24) which is suitable for torque transfer and can be brought into interaction with the stub axle (25) of a drive coupling.

14. Hub unit according to Claim 13, wherein a through opening (34, 14) in the outer ring (9) and the fixing ring (18) is fitted with systems (15), such as ABS, for monitoring brake pressure, tyre pressure, etc., etc., or combinations thereof.

15. Hub unit according to one of any of the preceding Claims, wherein the rolling bearing is a three-point or four-point bearing (1), the inner ring (2) of which is in one piece and the outer ring of which consists of two axial halves (7, 8), which halves (7, 8) are held clamped against one another under axial pretension.

16. Hub unit according to Claim 15, wherein the axial halves of the rolling bearing are clamped between the flange (30) of the fixing ring (18) and the flange (33) of the construction (19), which consists of a single assembly and comprises centring bush (20), ring component (21) and brake disc or brake drum (22).

17. Hub unit according to one of Claims 1-5, wherein the outer ring (50) bears the said clamping rim (51).
